# FASCICULE DE BREVET EUROPEEN

(11) **EP 2 307 319 B1**
(45) Date de publication et mention de la délivrance du brevet: **07.11.2012**
(21) Numéro de dépôt: 09802500.0
(22) Date de dépôt: 27.07.2009
(51) Int. Cl.: C02F 1/32, C02F 1/78

(54) **PROCEDE ET INSTALLATION DE TRAITEMENT DES EAUX RESIDUAIRES EN VUE D'EN ABATTRE L'EFFET PERTURBATEUR ENDOCRINIEN ET/OU L'EFFET TOXIQUE OU GENOTOXIQUE**
VERFAHREN UND ANLAGE ZUR BEHANDLUNG VON ABWASSER UNTER DEM ASPEKT DER BEKÄMPFUNG VON DESSEN ENDOKRIN-ZERSTÖRENDER UND/ODER TOXISCHER ODER GENOTOXISCHER WIRKUNG
PROCESS AND INSTALLATION FOR THE TREATMENT OF WASTE WATERS WITH A VIEW TO COMBATING THE ENDOCRINE DISRUPTING EFFECT AND/OR THE TOXIC OR GENOTOXIC EFFECT THEREOF

(30) Priorité: 29.07.2008 FR 0855225
(43) Date de publication de la demande: 13.04.2011
(73) Titulaire: Veolia Water Solutions & Technologies Support, 94417 Saint-Maurice Cedex (FR)
(72) Inventeur: CASTILLO RIVERA, Luis, 95000 Neuville Sur Oise (FR); FELIERS, Cédric, Shanghai 201702 (CN); MARTIN, Florencio, F-93300 Aubervilliers (FR)
(74) Mandataire: Larcher, Dominique
(86) Numéro de dépôt international: PCT/EP2009/059679
(87) Numéro de publication internationale: WO 2010/012693

(56) Documents cités:
- EP-A- 1 234 802
- JP-A- 2001 129 572
- GONG ET AL: "O3 and UV/O3 oxidation of organic constituents of biotreated municipal wastewater" WATER RESEARCH, ELSEVIER, AMSTERDAM, NL, vol. 42, no. 4-5, 1 février 2008 (2008-02-01), pages 1238-1244, XP022482408 ISSN: 0043-1354
- YOSHIDA T; SAITOH A; TANIOKA T; MURAKAMI H; MASUDA K: "Decomposition of endocrine disrupters in sewage treated water by ozonation" KOBELCO TECHNOLOGY REVIEW, no. 24, 1 octobre 2001 (2001-10-01), pages 45-49, XP008102301 ISSN: 0913-4794

## Description

### Domaine de l'invention

Le domaine de l'invention est celui du traitement des eaux résiduaires qu'elles soient d'origine urbaine ou industrielle.

Plus précisément, l'invention concerne un procédé et une installation pour le traitement de telles eaux en vue d'en abattre, et idéalement d'en éliminer, l'effet perturbateur endocrinien et/ou l'effet toxique et/ou l'effet génotoxique et d'en assurer la désinfection par l'élimination des microorganismes pathogènes.

### État de l'art antérieur

Les procédés de traitement des eaux usées urbaines et/ou industrielles de l'état de la technique permettent de dégrader l'essentiel de la pollution organique contenue dans celles-ci. Toutefois, la plupart des procédés actuels ont pour objectif de diminuer la concentration des composés organiques divers contenus dans ces eaux, sans prendre en compte la production éventuelle de sous-produits de dégradation. Les composés organiques résiduels et de tels sous-produits de dégradation peuvent avoir des effets biologiques additifs, synergiques ou antagonistes qui ne sont pas reflétés par une simple valeur de leur concentration dans l'eau.

Certains de ces composés organiques appelés « perturbateurs endocriniens » ou « substances à effet perturbateur endocrinien », se sont révélés toxiques pour les espèces vivantes exposées, notamment sur les organismes aquatiques des milieux récepteurs des rejets de station d'épuration. Ils sont constitués de molécules naturelles ou fabriquées par l'homme qui possèdent des propriétés hormono-mimétiques : elles se lient à des récepteurs d'hormones naturelles et interfèrent ainsi avec un ou plusieurs processus hormonaux contrôlant par exemple le comportement, la synthèse de protéines, la sécrétion, le transport de molécules, la reproduction et d'autres processus vitaux. Leurs effets toxiques, voire génotoxiques, peuvent impacter sur l'organisme d'un individu exposé mais également sur la descendance d'un individu exposé.

Dans un souci de préservation de l'environnement, et corollairement de préservation de la santé humaine, l'abattement de cet effet perturbateur endocrinien et/ou des effets toxique et génotoxique dans les eaux urbaines et/ou industrielles est devenu un objectif important des procédés de traitement de celles-ci.

L'un des objectifs de ces traitements est donc l'élimination de la matière organique. Dans le cadre de processus de désinfection généralement mis en oeuvre en fin de filières, en plus de l'élimination de microorganismes pathogènes, l'élimination de ces substances organiques est poussée le plus loin possible.

L'état de la technique propose différents procédés de désinfection des eaux mettant en oeuvre des composés chlorés, de l'ozone, des rayonnements ultraviolets...

Notamment, l'état de la technique propose des techniques d'oxydation chimique, mettant en oeuvre en particulier l'ozone, permettant d'abattre à la fois la teneur en micropolluants et en micro-organismes.

Les plus courantes de ces techniques mettent en oeuvre des réacteurs se présentant sous la forme de colonnes de contact (« contacteurs ») dans lesquelles transite l'eau à traiter et qui sont pourvus à leur base d'éléments poreux permettant la diffusion dans celle-ci de bulles d'air ou d'oxygène ozoné.

Afin de permettre l'oxydation efficace de la matière organique, il est nécessaire de prévoir dans ces colonnes un temps de contact suffisamment long de l'eau à traiter avec l'ozone. L'efficacité du transfert de masse augmentant avec la hauteur de la colonne, la hauteur utile économiquement optimale de telles colonnes est souvent en pratique d'environ 4 à 5 m.

Pour atteindre les normes sanitaires prescrites pour la potabilisation de l'eau ou le déversement en zone sensible comme les zones de baignades ou de pêche, il est nécessaire de mettre en oeuvre des doses d'ozone importantes. En pratique, l'ozone est diffusé dans l'eau traitée à raison d'un taux de traitement compris entre 5 et 30 mg d'ozone par litre dépendant de la qualité de l'effluent.

Il est également connu dans l'état de la technique de désinfecter l'eau en mettant en oeuvre des lampes émettant un rayonnement ultraviolet (UV) de longueur d'onde comprise entre 185 et 350 nm et plus généralement à 254 nm. Une telle utilisation des rayonnements UV (émis par tous types de sources d'irradiation, notamment des lampes, diodes électroluminescentes, technologie micro-ondes ou excimère) permet d'abattre fortement la teneur des eaux en micro-organismes, et notamment en micro-organismes pathogènes (bactéries, virus, organismes unicellulaires) mais ne permet pas d'éliminer un éventuel effet perturbateur endocrinien présent dans l'eau usée. Toutefois, l'efficacité des rayonnements UV est fortement limitée dans le cas d'eaux à traiter présentant une turbidité élevée, liée à l'absorption des radiations UV par le milieu et/ou une réflexion liée à la présence de particules.

Afin d'améliorer l'effet désinfectant des rayonnements UV, il est connu d'effectuer dans un premier temps une oxydation poussée par l'ozone pour améliorer la qualité des eaux et augmenter ainsi la transmission de la lumière UV, (plus spécifiquement à 254 nm) de l'eau, puis d'effectuer une irradiation UV pour éliminer les microorganismes ayant résisté à l'action de l'ozone.

Notamment, le brevet EP 1 320 513 B1 décrit un procédé de traitement d'eaux couplant une étape d'irradiation UV suivant une étape d'oxydation à l'ozone mettant en oeuvre des teneurs en ozone faible (entre 0,1 et 15 g/m³, et de préférence entre 5 et 10 g/m³), le procédé en question visant à abattre la teneur de ces eaux en micro-organismes et en micropolluants considérés comme perturbateurs endocriniens.

Cette technique présente toutefois l'inconvénient de nécessiter la mise en oeuvre soit d'un filtre à sable entre les moyens d'injection d'ozone dans l'eau et le dispositif d'irradiation UV, soit de colonnes d'ozonation imposant l'utilisation de moyens de dégazage entre lesdites colonnes et le dispositif d'irradiation UV pour évacuer les bulles de gaz qui pourraient nuire, selon les auteurs, à l'efficacité du dispositif de désinfection UV.

De telles colonnes d'ozone présentent les inconvénients d'être coûteuses à mettre en oeuvre et d'occuper une place importante.

Les filtres à sable présentent quant à eux les inconvénients d'être également volumineux et de devoir être régulièrement décolmatés.

Un tel procédé nécessite donc des ouvrages surdimensionnés, onéreux, consommateurs d'énergie et d'espace.

La demande de brevet JP2001-129572 décrit un procédé de traitement d'une eau usée industrielle en vue d'en abattre l'effet perturbateur endocrinien, le procédé comprenant une étape d'oxydation par l'ozone effectuée dans un réacteur d'ozonation immédiatement suivie d'une étape de désinfection par rayonnement UV de longueur d'onde comprise entre 185 et 350 nm effectuée dans une unité de désinfection UV.

### Objectifs de l'invention

Le principal objectif de l'invention est de proposer un procédé permettant l'élimination poussée des micropolluants, et plus particulièrement l'abattement de l'effet perturbateur endocrinien, et/ou de l'effet toxique et/ou de l'effet génotoxique apporté par certains composés organiques ou par leurs sous-produits de dégradation ou de transformation, en s'affranchissant des inconvénients liés à des taux de traitement d'ozone élevés, et à l'utilisation de colonnes d'ozonation et d'une étape de filtration de type granulaire (sable, charbon, zéolithe, tourbe...).

En d'autres termes, l'un des objectifs de la présente invention est de fournir un procédé de traitement des eaux résiduaires compact dans laquelle l'opération de mise en contact de l'ozone avec les eaux à traiter ne génère pas de concentration résiduelle d'ozone détectable par les moyens de mesure existants. Le taux de traitement appliqué reste inférieur à la demande immédiate en ozone.

Un objectif de la présente invention est de décrire un tel procédé qui permette concomitamment avec un procédé UV de désinfecter les eaux traitées, c'est-à-dire d'abattre leur teneur en micro-organismes pathogènes.

L'invention a également pour objectif de fournir une installation pour la mise en oeuvre d'un tel procédé, permettant à rendement élevé de réduire considérablement le dimensionnement des installations de génie civil classiquement utilisées pour le transfert de l'ozone dans l'eau, pour le dégazage et pour la filtration des eaux ozonées, voire de supprimer complètement ces installations.

Un autre objectif de l'invention est de fournir une installation de traitement à temps minimisé de contact de l'eau avec l'ozone, tout en permettant une bonne élimination des micropolluants ou transformation de ceux-ci pour supprimer leur effet perturbateur endocrinien, toxique ou génotoxique.

### Résumé de l'invention

Ces objectifs sont atteints grâce à un procédé de traitement d'une eau résiduaire urbaine et/ou industrielle en vue d'en abattre l'effet perturbateur endocrinien et/ou toxique et/ou l'effet génotoxique et d'en éliminer les microorganismes pathogènes, comprenant une étape d'oxydation par l'ozone et une étape de désinfection par rayonnement UV de longueur d'onde comprise entre 185 et 350 nm, avec de préférence une grande part du rayonnement à 254 nm, caractérisé en ce que ladite étape d'oxydation par l'ozone est effectuée dans un mélangeur statique à une dose d'ozone faible inférieure à la demande en ozone de ladite eau, en ce que ladite étape d'oxydation par l'ozone est immédiatement suivie de ladite étape de désinfection par rayonnement UV, et en ce qu'il comprend une étape de contrôle de ladite dose d'ozone mise en oeuvre dans ladite eau lors de ladite étape d'oxydation incluant la mesure d'au moins un paramètre représentatif de la qualité de l'eau, ladite mesure étant effectuée sur l'eau à traiter et/ou sur l'eau ayant subi ladite étape d'oxydation par l'ozone et avant sa désinfection par rayonnement UV, ladite étape de contrôle de ladite dose d'ozone visant à maintenir celle-ci entre 0,05 et 0,5 milligramme d'ozone par milligramme de la demande chimique en oxygène (DCO).

On notera que l'on entend, dans le cadre de la présente description, par « demande en ozone », la dose d'ozone qui est nécessaire pour satisfaire les besoins chimiques d'oxydation immédiate de l'eau et permettant d'obtenir un résiduel d'ozone.

L'utilisation, selon un tel procédé, d'une dose d'ozone faible inférieure à la demande en ozone de l'eau à traiter au cours de l'étape d'oxydation par l'ozone, et l'utilisation concomitante d'une étape de contrôle permettent d'éviter la présence de résiduel d'ozone.

En l'absence d'un tel résiduel d'ozone autorisé par de telles doses faibles, le procédé selon l'invention propose de mettre en oeuvre l'étape d'oxydation par l'ozone au moyen d'un mélangeur statique. Un tel appareillage présente l'avantage d'être moins coûteux et d'occuper un espace faible comparativement à l'espace occupé par les colonnes d'ozonation tout en permettant une diminution importante du temps de contact nécessaire par rapport à celles-ci résultant du transfert rapide de l'ozone de la phase gaz à la phase liquide.

L'utilisation de doses d'ozone inférieures à la demande en ozone de l'eau permet l'oxydation partielle de la matière organique contenue dans ces eaux et notamment l'oxydation des composés susceptibles de présenter un effet perturbateur endocrinien et/ou toxique et/ou un effet génotoxique et permet également l'obtention d'une eau présentant une amélioration de la transmission UV à 254 nm de ladite eau favorisant l'action du rayonnement ultraviolet mis en oeuvre lors de l'étape de désinfection UV.

Comme indiqué ci-dessus, l'utilisation d'un mélangeur statique en tant que réacteur d'oxydation permet d'accélérer le transfert entre l'ozone et l'eau ce qui permet un temps de contact faible par rapport aux procédés mettant en oeuvre des colonnes à bulles.

Un aspect important du procédé selon l'invention consiste dans le fait qu'il comprend une étape de contrôle de la dose d'ozone mise en oeuvre dans l'eau lors de l'étape d'oxydation.

Cette étape de contrôle consiste préférentiellement dans la mesure d'au moins un paramètre physico-chimique (DCO, pH, conductivité, potentiel d'oxydoréduction, transmission UV à 254 nm...) représentatif de la qualité de l'eau et/ou d'au moins un paramètre biologique faisant part de l'effet perturbateur endocrinien, toxique ou génotoxique à l'aide d'un matériel biologique (têtards, poissons, microorganismes procaryotes ou eucaryotes, lignées cellulaires humaines ou animales...).

En plus, une étape de contrôle de la dose de rayonnement UV lors de l'étape de désinfection peut aussi être prévue. Dans le cas de l'étape de désinfection le paramètre de contrôle est du type physico-chimique (transmission UV à 254 nm, turbidité, couleur...) ou optique (radiomètre pour évaluer la dose UV).

Ces étapes de contrôle permettent :
- de maintenir en permanence la dose d'ozone à une dose faible, inférieure à la demande en ozone de cette eau et au minimum juste nécessaire à l'élimination de l'effet perturbateur endocrinien et/ou toxique et/ou génotoxique ; et
- de maintenir la dose UV requise pour assurer l'efficacité de désinfection ciblée.

Le procédé selon l'invention est plus compact que les procédés proposés par l'art antérieur (pas besoin de colonnes de transfert gaz-liquide, d'étapes de dégazage et de filtration), et moins coûteux à mettre en oeuvre (doses d'ozone utilisées faibles et doses d'irradiation UV optimisées, donc réduction de l'énergie nécessaire pour la production d'ozone et du rayonnement UV et pas de frais liés aux dispositifs décrits précédemment).

Selon une variante préférentielle, ladite étape de contrôle de la dose d'ozone mise en oeuvre dans ladite eau lors de ladite étape d'oxydation inclut la mesure dudit paramètre sur l'eau à traiter et sur l'eau ayant subi ladite étape d'oxydation.

Selon un tel cas de figure, l'étape de contrôle consiste donc à mesurer ledit paramètre sur l'eau à traiter, avant son entrée dans le mélangeur statique, à mesurer ce même paramètre dans l'eau sortant dudit mélangeur statique et à modifier en conséquence la dose d'ozone distribuée.

Selon une variante préférentielle, ladite étape de contrôle de la dose UV mise en oeuvre dans ladite eau lors de ladite étape de désinfection inclut la mesure dudit paramètre sur l'eau à traiter et sur l'eau ayant subi ladite étape de désinfection.

Selon un tel cas de figure, l'étape de contrôle consiste donc à mesurer ledit paramètre sur l'eau à traiter, avant son entrée dans le réacteur UV, à mesurer ce même paramètre dans l'eau sortant dudit réacteur et à modifier en conséquence la dose UV appliquée.

Selon une variante préférentielle, les paramètres mesurés sont la DCO, l'effet biologique ciblé et la transmission UV de l'eau à 254 nm. Toutefois, ces paramètres pourront être choisis parmi d'autres paramètres (carbone organique total ou dissous, pH, conductivité, potentiel d'oxydoréduction, turbidité, couleur, mesure optique de la dose UV (par radiométrie), absorption UV...).

Également selon une variante préférentielle, l'étape de contrôle de la dose d'ozone et de l'irradiation UV mise en oeuvre dans ladite eau lors des étapes d'oxydation et de désinfection sont effectuées automatiquement.

Selon un aspect intéressant de l'invention, le procédé comprend également une étape de contrôle de l'effet perturbateur endocrinien et/ou toxique et/ou de l'effet génotoxique, ladite étape de contrôle mettant en oeuvre un capteur biologique mesurant au moins un paramètre représentatif desdits effets de l'eau à traiter d'une part et de l'eau traitée et/ou de l'eau en cours de traitement provenant de ladite étape d'ozonation d'autre part.

Egalement selon une variante préférentielle, ladite étape de contrôle de la dose d'ozone vise à maintenir ladite dose d'ozone comprise entre 0,05 et 0,5 mg d'ozone par mg de DCO et plus spécifiquement à 0,1 milligramme d'ozone par milligramme de DCO.

Avantageusement, l'étape de désinfection par rayonnement UV est mise en oeuvre à une dose inférieure à 1 000 J / m².

L'invention concerne également une installation pour la mise en oeuvre de ce procédé, ladite installation comprenant des moyens d'amenée d'une eau à traiter, des moyens d'amenée d'ozone, au moins un réacteur d'ozonation, au moins une unité de désinfection par rayonnement UV et des moyens d'évacuation de l'eau traitée, caractérisée en ce que ledit réacteur d'ozonation est un mélangeur statique, en ce qu'elle comprend :
des moyens permettant d'acheminer directement l'eau provenant du mélangeur statique à ladite unité de désinfection UV ou bien d'intégrer ledit mélangeur statique au réacteur UV; et,
au moins un capteur physico-chimique permettant de mesurer au moins un paramètre physique représentatif de la teneur en matières oxydables (demande chimique en oxygène par exemple) de l'eau à traiter ou de l'eau sortant dudit mélangeur statique.

Une telle installation présente l'avantage d'être beaucoup plus compacte qu'une installation selon l'art antérieur mettant en oeuvre les colonnes d'ozonation.

L'utilisation d'un mélangeur statique permet un temps de contact entre l'eau et l'ozone dans ce réacteur d'oxydation court et permet ainsi de diminuer le temps de contact global de l'eau avec l'ozone avec l'installation. Selon une variante intéressante de l'invention, l'installation comprend des moyens de dosage automatique de l'ozone amenée par lesdits moyens d'amenée d'ozone, lesdits moyens de dosage étant relié audit capteur physico-chimique.

Ces moyens de dosage automatiques permettent de modifier la dose d'ozone distribuée dans le mélangeur statique en fonction des résultats obtenus lors de la mesure du paramètre représentatif de la qualité de l'eau à traiter et/ou de la qualité de l'eau sortant du mélangeur statique.

Selon une variante préférentielle, le capteur physico-chimique est un capteur indiquant la teneur en matières oxydables et/ou organiques (DCO, COT) et/ou la transmission des rayons UV à 254 nm.

Egalement selon une autre variante intéressante de l'invention, lesdits moyens permettant d'acheminer directement l'eau provenant du réacteur d'ozonation à ladite unité de désinfection UV et des moyens d'évacuation de l'eau traitée sont prévus en ligne compact selon une conception dite « d'usine tuyau ».

Une telle caractéristique permet d'envisager une intégration aisée de celle-ci dans les ouvrages existants.

Egalement selon une autre variante intéressante de l'invention, l'installation comprend au moins un capteur biologique d'au moins un paramètre représentatif de l'effet perturbateur endocrinien et/ou toxique et/ou de l'effet génotoxique de l'eau traitée et/ou de l'eau en cours de traitement sortant dudit mélangeur statique.

Préférentiellement, ledit capteur biologique est choisi dans le groupe constitué par les capteurs biologiques mettant en oeuvre des têtards, des poissons, des microorganismes procaryotes ou eucaryotes et/ou des capteurs biologiques mettant en oeuvre des lignées cellulaires humaines ou animales.

L'invention, ainsi que les différents avantages qu'elle présente, seront mieux compris en référence à la description qui va suivre d'un mode non limitatif de réalisation de celle-ci donné en référence aux dessins dans lesquels :
- la figure 1 représente de façon schématique, une installation selon l'invention pour la mise en oeuvre du procédé ;
- la figure 2 représente un graphe relatif à des essais de désinfection UV (dose 400 J/m²) réalisés grâce au procédé selon l'invention ;
- la figure 3 représente un graphe de la transmittance UV à 254 nm de la sortie d'une eau provenant de station d'épuration avant et après traitement par ozonation ou irradiation UV (avec un trajet optique de 10 mm).

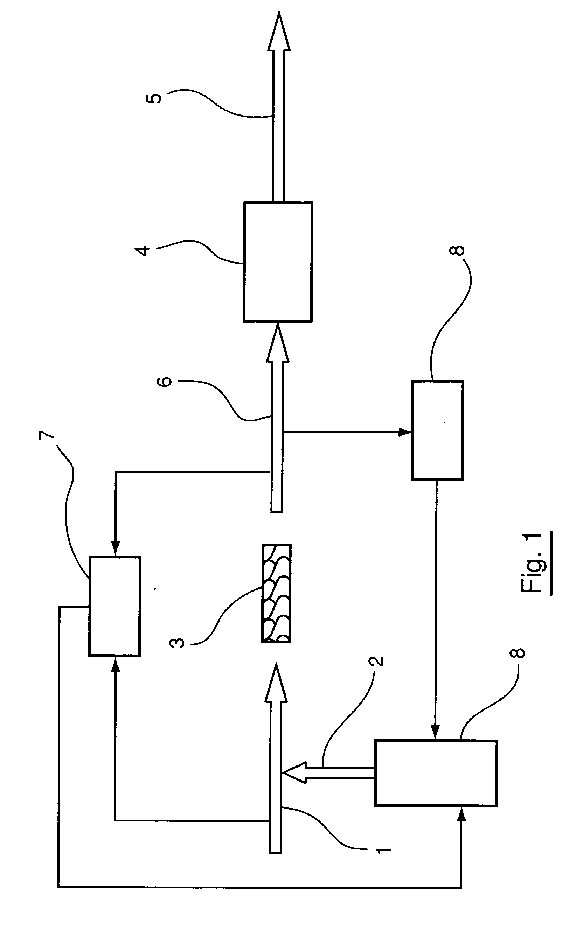

L'installation représentée à la figure 1 comprend des moyens d'amenée 1 d'une eau à traiter. Cette eau à traiter peut être une eau ayant déjà subi un procédé d'épuration par voie biologique et/ou voie physique ou chimique dans une station d'épuration (STEP).

L'installation comprend par ailleurs des moyens d'amenée 2 d'ozone, un réacteur d'oxydation constitué par un mélangeur statique 3, une unité de désinfection par rayonnement UV 4, des moyens d'évacuation de l'eau traitée 5 et de moyens 6 permettant d'acheminer directement l'eau provenant du mélangeur statique à l'unité de désinfection par rayonnement UV 4. Les moyens 5 et 6 comprennent des canalisations.

L'invention comprend également un capteur physico-chimique 7 indiquant la DCO, le COT et/ou la transmission UV à 254 nm de l'eau permettant de mesurer la turbidité de l'eau à traiter arrivant par les moyens d'amenée d'eau 1 et de l'eau sortant du mélangeur statique transitant par les moyens 6 d'acheminement direct de l'eau provenant du mélangeur statique à l'unité de désinfection UV 4.

Il est ainsi établi une boucle de contrôle de la dose d'ozone mis en oeuvre pour l'étape d'oxydation du procédé qui permet de maintenir la dose en ozone distribuée dans l'eau comprise entre 0,05 et 0,5 milligramme d'ozone par milligramme de DCO.

L'installation selon l'invention comprend également un capteur 8 de l'effet perturbateur endocrinien et/ou toxique et/ou génotoxique de l'eau provenant du mélangeur statique. Ce capteur est constitué par un capteur biologique mettant en oeuvre notamment des têtards, des poissons, des microorganismes ou lignes cellulaires humaines ou animales. Ce capteur biologique permet de réguler manuellement ou automatiquement la dose en ozone dans les moyens d'amenée 2 d'ozone si un effet perturbateur endocrinien et/ou un effet toxique et/ou un effet génotoxique trop élevé est observé grâce à ce capteur biologique..

Trois échantillons d'une même eau contenant des concentrations de molécules (17 β-Estradiol, 17 α-Estradiol, 17 α-Ethinylestradiol, Estrone) présentant un effet perturbateur endocrinien avéré ont été traités selon différents traitement, à savoir :
- un traitement d'oxydation par l'ozone, effectué, à l'aide d'un mélangeur statique , en mettant en oeuvre une dose d'ozone de 0,1 mg d'ozone par mg de DCO ;
- un traitement par rayonnement UV seul mettant en oeuvre une dose de 400 J/m² ;
- un traitement selon l'invention mettant en oeuvre une dose de 0,1 mg d'ozone par mg de DCO et un rayonnement UV selon une dose de 400 J/ m².

Des essais biologiques *in vitro* mettant en oeuvre les modèles cellulaires HELN ERα (présentant un récepteur d'estrogène en configuration α) et HELN ERβ (présentant un récepteur d'estrogène en configuration β) ; ainsi que des essais biologiques *in vivo* mettant en oeuvre de modèles amphibiens ont été effectués. Les résultats de ces essais sont synthétisés dans le tableau 1 ci-après.

**Tableau 1. Evaluation biologique in vitro et in vivo de l'effet perturbateur endocrinien avant et après différents traitements**

| Traitement | Effet perturbateur endocrinien | | | | |
|---|---|---|---|---|---|
| | Axe thyroïdien | | Axe estrogénique | | |
| | In vitro^{(a)} | In vivo^{(b)} | In vivo^{(b)} | In vitro Erα^{(c)} | In vitro Erβ^{(c)} |
| Sortie STEP | + | + | + | + | + |
| Sortie STEP + O₃ | +/- | - | - | - | - |
| Sortie STEP + UV | +/- | - | - | + | + |
| Sortie STEP + os +UV | +/- | - | ND | - | - |

| | | | | | |
|---|---|---|---|---|---|
| (a) Essais réalisés sur des astrocytes de rat (culture primaire) en suivant l'activité désiodase de type 2 (D2) dans des conditions basales ou activées par la foskoline ou le TPA. (b) Essais réalisés à l'aide de larves de *Xenopus laevis.* (c) Essais réalisés à l'aide des lignées cellulaires humaines HELN, transfectées de manière stable par des éléments de réponse aux hormones ERα et ERβ. + : Effet perturbateur endocrinien présent +/- : Effet moins important (mais pas absent) que dans l'eau non traitée. - : Effet perturbateur endocrinien absent ND : non disponible | | | | | |

Ces résultats montrent que les échantillons d'eau non traitée et ceux traités par UV (dose de 400 J/m2) seul sont positifs en activité estrogénique, c'est-à-dire montrent qu'il y a encore un effet perturbateur endocrinien, et que les molécules responsables de l'effet perturbateur endocrinien sont plus actives sur ERα que sur ERβ.

Par contre lors d'un traitement par ozone, ou d'un traitement à l'ozone et aux UV selon l'invention, il n'y a plus d'effet perturbateur endocrinien. Des analyses chimiques montrent des résultats qui confirment que les molécules susceptibles d'induire ledit effet sont bien mieux neutralisées grâce à l'invention. Ces résultats sont indiqués dans le tableau 2 ci-après.

**Tableau 2. Analyse chimique (GC/MS-MS) de certaines molécules à effet perturbateur endocrinien avéré contenues dans les eaux avant et après différents traitements.**

| ***Echantillons*** | ***Concentration (ng*/*L)*** | | | |
|---|---|---|---|---|
| | ***17β Estradiol*** | ***17*α *Estradiol*** | ***Ethinylestradiol*** | ***Estrone*** |
| ***Eau avant traitement*** | 3,4 | <0,2 | 2,2 | 5,8 |
| ***Eau traitée par UV*** | 2,8 | <0,2 | 1,6 | 5,1 |
| ***Eau traitée par 03*** | 0,2 | <0,2 | <0,4 | 0,3 |
| ***Eau traitée par 03** +* ***UV se*/*on l'invention*** | <0,2 | <0,2 | <0,4 | 0,3 |

Les concentrations en microorganismes (coliformes totaux, coliformes thermotolérants, entérocoques) dont au moins certains sont pathogènes,
de l'eau avant traitement (eau à la sortie de la station d'épuration « sortie STEP » et eau constituée par un échantillon collecté en sortie de STEP sur une période de 24 heures « sortie Moyenne STEP »),
de l'eau après traitement UV (« Sortie STEP + UV ») ;
de l'eau après traitement à l'ozone à une dose faible inférieure à la demande en ozone de ladite eau (« Sortie STEP + 03 ») ; et
de l'eau après traitement à une dose faible inférieure à la demande en ozone de ladite eau et traitement UV selon l'invention (« Sortie STEP 03/UV ») selon l'invention ;
ont été mesurées.

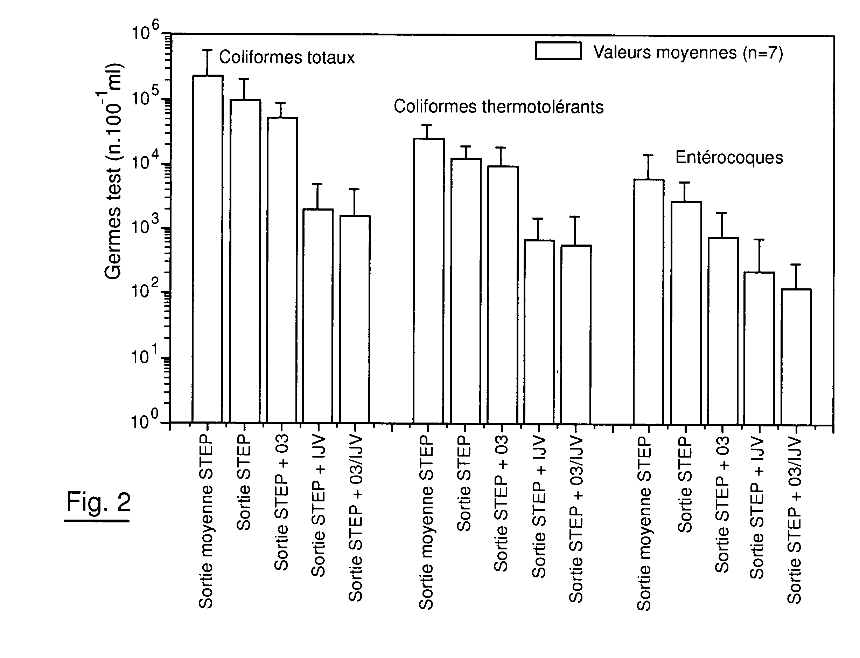

Les résultats de ces mesures sont portés sur le graphe selon la figure 2. Ces résultats montrent que l'invention permet d'améliorer l'élimination des microorganismes, notamment pathogènes.

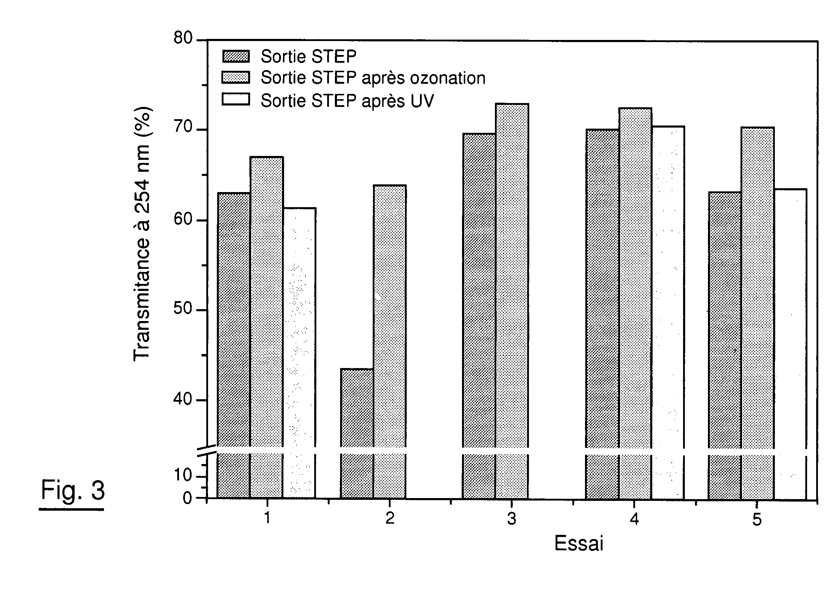

Les transmittances
de l'eau à la sortie de la station d'épuration (« sortie STEP ) ;
de l'eau après traitement UV (« sortie STPE avprès UV ») ; et,
de l'eau après traitement à une dose faible inférieure à la demande en ozone de ladite eau (« sortie STEP après ozonation »)
ont par ailleurs été mesurées. Les résultats de ces mesures sont portés sur le graphe selon la figure 3. Ces résultats montrent une amélioration de la transmittance UV après traitement de l'échantillon d'eau par l'ozone à une dose faible inférieure à la demande en ozone. Cette amélioration de la transmittance UV grâce au traitement à l'ozone permet d'expliquer l'amélioration de l'abattement en microorganismes notamment pathogènes selon l'invention.

## Revendications

1. Procédé de traitement d'une eau résiduaire urbaine et/ou industrielle en vue d'en abattre l'effet perturbateur endocrinien et/ou l'effet toxique et/ou l'effet génotoxique et d'en éliminer les microorganismes pathogènes comprenant une étape d'oxydation par l'ozone et une étape de désinfection par rayonnement UV de longueur d'onde comprise entre 185 et 350 nm,
**caractérisé en ce que** ladite étape d'oxydation par l'ozone est effectuée dans un mélangeur statique à une dose d'ozone faible inférieure à la demande en ozone de ladite eau,
**en ce que** ladite étape d'oxydation par l'ozone est immédiatement suivie de ladite étape de désinfection par rayonnement UV,
et **en ce qu'**il comprend une étape de contrôle de ladite dose d'ozone mise en oeuvre dans ladite eau lors de ladite étape d'oxydation incluant la mesure d'au moins un paramètre représentatif de la qualité de l'eau, ladite mesure étant effectuée sur l'eau à traiter et/ou sur l'eau ayant subi ladite étape d'oxydation par l'ozone et avant sa désinfection par rayonnement UV, ladite étape de contrôle de ladite dose d'ozone visant à maintenir celle-ci entre 0,05 et 0,5 milligramme d'ozone par milligramme de la demande chimique en oxygène (DCO).

2. Procédé selon la revendication 1 **caractérisé en ce que** ledit paramètre est un paramètre physico-chimique représentatif de la qualité de l'eau et/ou un paramètre biologique faisant part de l'effet perturbateur endocrinien, toxique ou génotoxique à l'aide d'un matériel biologique.

3. Procédé selon l'une quelconque des revendications 1 ou 2 **caractérisé en ce que** ladite étape de contrôle de la dose d'ozone mise en oeuvre dans ladite eau lors de ladite étape d'oxydation inclut la mesure dudit paramètre sur l'eau à traiter et sur l'eau ayant subi ladite étape d'oxydation.

4. Procédé selon l'une quelconque des revendications 1 à 3 **caractérisé en ce que** ladite étape de contrôle de la dose d'ozone mise en oeuvre dans ladite eau lors de ladite étape d'oxydation est effectuée automatiquement.

5. Procédé selon l'une quelconque des revendications 1 à 4 **caractérisé en ce qu'**il comprend une étape complémentaire de contrôle de la dose de rayonnement UV dispensée lors de ladite étape de désinfection, incluant la mesure d'au moins un paramètre physico-chimique ou optique représentatif de la qualité de l'eau.

6. Procédé selon la revendication 5 **caractérisé en ce que** ledit paramètre est un paramètre physico-chimique représentatif de la qualité de l'eau et/ou un paramètre biologique faisant part de l'effet perturbateur endocrinien, toxique ou génotoxique à l'aide d'un matériel biologique.

7. Procédé selon l'une quelconque des revendications 1 à 6 caractérisé en qu'il comprend une étape de contrôle de l'effet perturbateur endocrinien et/ou de l'effet toxique et/ou de l'effet génotoxique, ladite étape de contrôle mettant en oeuvre un capteur biologique mesurant au moins un paramètre représentatif desdits effets de l'eau à traiter d'une part et de l'eau provenant de ladite étape d'ozonation d'autre part.

8. Procédé selon l'une quelconque des revendications 1 à 7 **caractérisé en ce que** ladite étape de contrôle de la dose d'ozone vise à maintenir ladite dose d'ozone à environ 0,1 milligramme d'ozone par milligramme de DCO.

9. Procédé selon l'une quelconque des revendications 1 à 8 **caractérisée en ce que** ladite étape de désinfection par rayonnement UV est mise en oeuvre à une dose inférieure à 1000 J/m².

10. Installation de traitement d'une eau résiduaire urbaine et/ou industrielle pour la mise en oeuvre du procédé selon l'une quelconque des revendications 1 à 9 comprenant des moyens d'amenée d'une eau à traiter (1), des moyens d'amenée (2) d'ozone, au moins un réacteur d'ozonation, au moins une unité de désinfection par rayonnement UV (4) et des moyens d'évacuation de l'eau traitée (5),
**caractérisée en ce que** ledit réacteur d'ozonation est un mélangeur statique (3), **en ce qu'**elle comprend :
des moyens (6) permettant d'acheminer directement l'eau provenant du mélangeur statique (3) à ladite unité de désinfection UV (4) et
au moins un capteur physico-chimique (7) permettant de mesurer au moins un paramètre physique ou chimique représentatif de la teneur en DCO de l'eau à traiter et/ou de l'eau sortant dudit mélangeur statique.

11. Installation selon la revendication 10 **caractérisée en ce que** ledit capteur physico-chimique est un capteur indiquant la DCO et/ou la transmission UV à 254 nm.

12. Installation selon l'une quelconque des revendications 10 ou 11 **caractérisée en ce que** lesdits moyens d'amenée de l'eau à traiter, ledit mélangeur statique, ladite unité de désinfection UV, lesdits moyens permettant d'acheminer directement l'eau provenant du réacteur d'ozonation à ladite unité de désinfection UV et des moyens d'évacuation de l'eau traitée sont prévus en ligne compact selon une conception dite « d'usine tuyau ».

13. Installation selon l'une quelconque des revendications 10 à 12 **caractérisée en ce qu'**elle comprend au moins un capteur biologique d'au moins un paramètre représentatif de l'effet perturbateur endocrinien et/ou de l'effet toxique et/ou de l'effet génotoxique de l'eau en cours de traitement sortant dudit mélangeur statique.

14. Installation selon la revendication 13 **caractérisée en ce que** ledit capteur biologique est choisi dans le groupe constitué par les capteurs biologiques mettant en oeuvre des têtards, des poissons, des microorganismes et des capteurs biologiques mettant en oeuvre des lignées cellulaires humaines ou animales.

## Claims

1. A method for treating urban and/or industrial waste water with a view to reducing its adverse endocrine effect and/or toxic effect and/or genotoxic effect and eliminating pathogenic microorganisms therefrom, comprising an ozone oxidation step and a disinfection step by UV radiation with a wavelength of between 185 and 350 nm,
**characterised in that** said ozone oxidation step is carried out in a static mixer at a low dose of ozone which is less than the ozone demand of said water,
**in that** said ozone oxidation step is immediately followed by said UV radiation disinfection step,
and **in that** it comprises a step of monitoring said ozone dose used in said water during said oxidation step, including measuring at least one parameter which is representative of the water quality, said measurement being performed on the water to be treated and/or on the water having undergone said ozone oxidation step and prior to its UV radiation disinfection, said step of monitoring said ozone dose aiming to maintain it at between 0.05 and 0.5 milligrams of ozone per milligram of the chemical oxygen demand (COD).

2. The method according to claim 1, **characterised in that** said parameter is a physico-chemical parameter which is representative of the water quality and/or a biological parameter forming part of the adverse endocrine, toxic or genotoxic effect using a biological material.

3. The method according to any one of claims 1 or 2, **characterised in that** said step of monitoring the ozone dose used in said water during said oxidation step includes measuring said parameter in the water to be treated and in the water having undergone said oxidation step.

4. The method according to any one of claims 1 to 3, **characterised in that** said step of monitoring the ozone dose used in said water in said oxidation step is performed automatically.

5. The method according to any one of claims 1 to 4, **characterised in that** it comprises an additional step of monitoring the dose of UV radiation provided in said disinfection step, including measuring at least one physico-chemical or optical parameter which is representative of the water quality.

6. The method according to claim 5, **characterised in that** said parameter is a physico-chemical parameter which is representative of the water quality and/or a biological parameter forming part of the adverse endocrine, toxic or genotoxic effect using a biological material.

7. The method according to any one of claims 1 to 6, **characterised in that** it comprises a step of monitoring the adverse endocrine effect and/or the toxic effect and/or the genotoxic effect, said monitoring step using a biosensor measuring at least one parameter which is representative of said effects of the water to be treated on the one hand and of the water coming from said ozonation step on the other hand.

8. The method according to any one of claims 1 to 7, **characterised in that** said step of monitoring the ozone dose aims to maintain said ozone dose at about 0.1 milligrams of ozone per milligram of COD.

9. The method according to any one of claims 1 to 8, **characterised in that** said UV radiation disinfection step is carried out at a dose lower than 1000 J/m².

10. An installation for treating urban and/or industrial waste water for the implementation of the method according to any one of claims 1 to 9, comprising means for supplying water to be treated (1), means for supplying (2) ozone, at least one ozonation reactor, at least one UV radiation disinfection unit (4) and means for discharging the treated water (5),
**characterised in that** said ozonation reactor is a static mixer (3), **in that** it comprises:
means (6) allowing the water coming from the static mixer (3) to be conveyed directly to said UV disinfection unit (4) and
at least one physico-chemical sensor (7) enabling the measurement of at least one physical or chemical parameter which is representative of the COD content of the water to be treated and/or of the water exiting said static mixer.

11. The installation according to claim 10, **characterised in that** said physico-chemical sensor is a sensor indicating the COD and/or UV transmission at 254 nm.

12. The installation according to any one of claims 10 or 11, **characterised in that** said means for conveying the water to be treated, said static mixer, said UV disinfection unit, said means allowing the water coming from the ozonation reactor to be conveyed directly to said UV disinfection unit and means for discharging the treated water are provided in a compact line according to a so-called "pipeline plant" design.

13. The installation according to any one of claims 10 to 12, **characterised in that** it comprises at least one biosensor of at least one parameter which is representative of the adverse endocrine effect and/or the toxic effect and/or the genotoxic effect of the water being treated as it exits said static mixer.

14. The installation according to claim 13, **characterised in that** said biosensor is selected from the group consisting of biosensors using tadpoles, fish, microorganisms and biosensors using human or animal cell lines.

## Patentansprüche

1. Verfahren zur Behandlung eines kommunalen und/oder gewerblichen Abwassers, um dessen Wirkung als endokriner Disruptor und/oder dessen toxische Wirkung und/oder dessen genotoxische Wirkung aufzuheben und die pathogenen Mikroorganismen darin zu beseitigen, wobei es einen Schritt der Oxidation durch Ozon und einen Schritt der Desinfektion durch UV-Strahlung mit einer Wellenlänge im Bereich von 185 bis 350 nm umfasst,
**dadurch gekennzeichnet, dass** der Schritt der Oxidation durch Ozon in einem statischen Mischer mit einer niedrigen Ozondosis durchgeführt wird, welche geringer als der Ozonbedarf des Wassers ist,
dass unmittelbar auf den Schritt der Oxidation durch Ozon der Schritt der Desinfektion durch UV-Strahlung folgt,
und dass es einen Schritt der Überprüfung der Ozondosis umfasst, welche beim Oxidationsschritt im Wasser zum Einsatz kommt, wobei dieser die Messung mindestens eines Parameters beinhaltet, der repräsentativ für die Qualität des Wassers ist, wobei die Messung an dem zu behandelnden Wasser und/oder an dem Wasser vorgenommen wird, welches dem Schritt der Oxidation durch Ozon unterzogen wurde und noch nicht durch UV-Strahlung desinfiziert wurde, wobei der Schritt der Überprüfung der Ozondosis darauf abzielt, diese zwischen 0,05 und 0,5 Milligramm Ozon pro Milligramm an chemischem Sauerstoffbedarf (CSB) zu halten.

2. Verfahren nach Anspruch 1, **dadurch gekennzeichnet, dass** es sich bei dem Parameter um einen physikalisch-chemischen Parameter handelt, der repräsentativ für die Qualität des Wassers ist, und/oder um einen biologischen Parameter, der Bestandteil der Wirkung als endokriner Disruptor, der toxischen oder der genotoxischen Wirkung mit Hilfe eines biologischen Materials ist.

3. Verfahren nach einem beliebigen der Ansprüche 1 oder 2, **dadurch gekennzeichnet, dass** der Schritt der Überprüfung der Ozondosis, welche beim Oxidationsschritt im Wasser zum Einsatz kommt, die Messung des Parameters für das zu behandelnde Wasser und für das Wasser, welches dem Oxidationsschritt unterzogen wurde, beinhaltet.

4. Verfahren nach einem beliebigen der Ansprüche 1 bis 3, **dadurch gekennzeichnet, dass** der Schritt der Überprüfung der Ozondosis, welche beim Oxidationsschritt im Wasser zum Einsatz kommt, automatisch durchgeführt wird.

5. Verfahren nach einem beliebigen der Ansprüche 1 bis 4, **dadurch gekennzeichnet, dass** es einen ergänzenden Schritt der Überprüfung der UV-Strahlungsdosis umfasst, welche beim Desinfektionsschritt abgegeben wird, wobei er die Messung mindestens eines physikalisch-chemischen oder optischen Parameters beinhaltet, welcher repräsentativ für die Qualität des Wassers ist.

6. Verfahren nach Anspruch 5, **dadurch gekennzeichnet, dass** es sich bei dem Parameter um einen physikalisch-chemischen Parameter handelt, der repräsentativ für die Qualität des Wassers ist, und/oder um einen biologischen Parameter, der Bestandteil der Wirkung als endokriner Disruptor, der toxischen oder der genotoxischen Wirkung mit Hilfe eines biologischen Materials ist.

7. Verfahren nach einem beliebigen der Ansprüche 1 bis 6, **dadurch gekennzeichnet, dass** es einen Schritt der Überprüfung der Wirkung als endokriner Disruptor und/oder der toxischen Wirkung und/oder der genotoxischen Wirkung umfasst, wobei ein biologischer Sensor bei diesem Überprüfungsschritt zum Einsatz kommt, welcher mindestens einen Parameter misst, der repräsentativ für die Wirkungen einerseits des zu behandelnden Wassers und andererseits des Wassers, welches aus den Ozonierungsschritt stammt, ist.

8. Verfahren nach einem beliebigen der Ansprüche 1 bis 7, **dadurch gekennzeichnet, dass** der Schritt der Überprüfung der Ozondosis darauf abzielt, die Ozondosis bei ungefähr 0,1 Milligramm Ozon pro Milligramm an CSB zu halten.

9. Verfahren nach einem beliebigen der Ansprüche 1 bis 8, **dadurch gekennzeichnet, dass** der Schritt der Desinfektion durch UV-Strahlung mit einer Dosis von weniger als 1000 J/m² durchgeführt wird.

10. Anlage zur Behandlung eines kommunalen und/oder gewerblichen Abwassers, zur Durchführung des Verfahrens nach einem beliebigen der Ansprüche 1 bis 9, wobei sie Mittel zur Zuleitung eines zu behandelnden Wassers (1), Mittel zur Zuleitung (2) von Ozon, mindestens einen Ozonierungsreaktor, mindestens eine Einheit zur Desinfektion durch UV-Strahlung (4) und Mittel zur Ableitung des behandelten Wassers (5) umfasst.
**dadurch gekennzeichnet, dass** es sich bei dem Ozonierungsreaktor um einen statischen Mischer (3) handelt, dadurch, dass sie Folgendes umfasst:
Mittel (6), die es ermöglichen, das Wasser aus dem statischen Mischer (3) unmittelbar zur UV-Desinfektionseinheit (4) zu leiten, und
mindestens einen physikalisch-chemischen Sensor (7), der es ermöglicht, mindestens einen physikalischen oder chemischen Parameter zu messen, der repräsentativ ist für den CSB-Wert des zu behandelnden Wassers und/oder des Wassers, welches den statischen Mischer verlässt.

11. Anlage nach Anspruch 10, **dadurch gekennzeichnet, dass** es sich bei dem physikalisch-chemischen Sensor um einen Sensor handelt, welcher den CSB und/oder den UV-Durchgang bei 254 nm anzeigt.

12. Anlage nach einem beliebigen der Ansprüche 10 oder 11, **dadurch gekennzeichnet, dass** die Mittel zur Zuleitung eines zu behandelnden Wassers, der statische Mischer, die Einheit zur UV-Desinfektion, die Mittel, welche es ermöglichen, das Wasser aus dem Ozonierungsreaktor unmittelbar zur UV-Desinfektionseinheit zu leiten, und die Mittel zur Ableitung des behandelten Wassers hintereinander gemäß einer kompakten Bauart angeordnet sind, die als "rohrintegrierte Aufbereitungsanlage" bezeichnet werden kann.

13. Anlage nach einem beliebigen der Ansprüche 10 bis 12, **dadurch gekennzeichnet, dass** sie mindestens einen biologischen Sensor für mindestens einen Parameter umfasst, der repräsentativ für die Wirkung als endokriner Disruptor und/oder die toxische Wirkung und/oder die genotoxische Wirkung des gerade behandelten Wassers ist, welches den statischen Mischer verlässt.

14. Anlage nach Anspruch 13, **dadurch gekennzeichnet, dass** der biologische Sensor aus der Gruppe gewählt ist, die aus den biologischen Sensoren, bei welchen Kaulquappen, Fische, Mikroorganismen zum Einsatz kommen, und den biologischen Sensoren, bei welchen menschliche oder tierische Zelllinien zum Einsatz kommen, besteht.
